# EUROPÄISCHE PATENTSCHRIFT

(11) **EP 0 710 702 B1**
(45) Veröffentlichungstag und Bekanntmachung des Hinweises auf die Patenterteilung: **26.05.1999**
(21) Anmeldenummer: 95116791.5
(22) Anmeldetag: 25.10.1995
(51) Int. Cl.: C08L 27/12, C08J 9/02

(54) **Formmasse auf Basis von Fluorpolymeren und Verfahren zur Herstellung von Schaumstoff daraus**
Moulding composition bared on fluoropolymers and process for preparing foams therefrom
Composition à mouler à base de polymères fluorés et procédé de préparation de mousses à partir de cette composition

(30) Priorität: 07.11.1994 DE 4439767
(43) Veröffentlichungstag der Anmeldung: 08.05.1996
(73) Patentinhaber: Ticona GmbH, 65451 Kelsterbach (DE)
(72) Erfinder: Schönfeld, Axel, Dr., D-65207 Wiesbaden (DE); Schleicher, Andreas, Dr., D-65614 Beselich (DE); Frank, Georg, Dr., D-72074 Tübingen (DE); Scheckenbach, Helmut, Dl., D-63226 Langen (DE)

(56) Entgegenhaltungen:
- EP-A- 0 356 948
- EP-A- 0 633 290
- DE-A- 4 314 737

## Beschreibung

Die Erfindung betrifft eine Formmasse auf Basis von Fluorpolymeren und ein Verfahren zur Herstellung von Schaumstoff durch thermische Behandlung der Formmasse.

Geschäumte Polymermassen sind wohlbekannt. Sie finden insbesondere dort Anwendung, wo geringes Gewicht oder ein hohes Festigkeits/Gewichts-Verhältnis gefordert ist. Geschäumte Fluorpolymere können als chemikalien- oder wärmebeständige Isolationsmaterialen, z. B. im chemischen Apparatebau, Verwendung finden.

Üblicherweise wird Schaumstoff aus Polymermassen hergestellt, indem der Polymermasse ein Blähmittel zugesetzt wird, das in der Hitze gasförmige Abspaltprodukte freisetzt. Die Restprodukte dieser Blähmittel können sich aber mitunter einschränkend und damit nachteilig auf die späteren Verwendungsmöglichkeiten des Schaumstoffes auswirken.

Aufgabe der vorliegenden Erfindung war die Entwicklung einer Formmasse auf Basis von Fluorpolymeren, und eines daraus hergestellten Schaumstoffes der nicht den Zusatz üblicher Blähmittel zu dem zu verschäumenden Polymer erfordert, sowie eines Verfahrens zur Herstellung eines solchen Schaumstoffes, das ohne Zusatz von Blähmittel eine starke Aufschäumung ermöglicht.

Es wurde überraschend gefunden, daß eine Mischung von Fluorpolymeren mit Polymeren, die in der Polymerkette Sulfoxidgruppen enthalten, leicht einen Schaumstoff bilden. Unter der Einwirkung von Hitze zersetzt sich das thermisch instabile Sulfoxid, wobei die Sulfoxidgruppen zum Sulfid reduziert werden. Gleichzeitig wird Sauerstoff oder CO₂ und H₂O freigesetzt, die als Blähmittel wirken.

Unter Sulfoxidgruppen enthaltenden Polymeren werden erfindungsgemäß Polymere verstanden, die wenigstens eine Arylensulfoxideinheit (-Ar-SO-; Ar = Arylen) enthalten. Arylene sind beispielsweise Phenylen, Biphenylen (-C₆H₄-C₆H₄-), Naphthalen, Anthracen oder Phenanthren, die jeweils ein- oder mehrfach substituiert sein können. Substituenten sind z. B. geradkettige, cyclische oder verzweigte C₁ - C₂₀ - Kohlenwasserstoffreste, wie C₁ - C₁₀ - Alkylreste, z. B. Methyl, Ethyl, n-Propyl, iso-Propyl, n-Butyl, t-Butyl, n-Hexyl oder C₆ - C₁₄-Arylreste, z. B. Phenyl oder Naphthyl, Halogene, Sulfonsäure-, Amino-, Nitro-, Cyano-, Hydroxy-, Alkyloxy oder Carboxylgruppen.

Ein bevorzugtes Sulfoxidgruppen enthaltendes Polymer ist Polyphenylensulfoxid, das z. B. leicht durch die Oxidation von Polyphenylensulfid mit Ozon oder Salpetersäure hergestellt werden kann.

Als Fluorpolymere können die folgenden Fluorthermoplaste mit wiederkehrenden Einheiten der Formeln (I) und (II) verwendet werden: 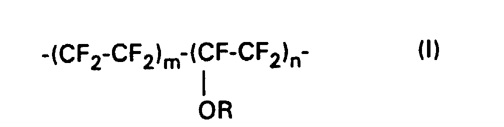 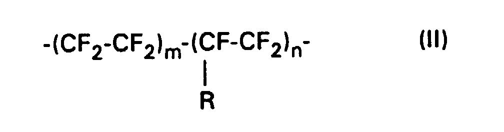 wobei
R in (I) und (II) für einen oder mehrere verschiedene perfluorierte Alkylreste mit 1 bis 8 C-Atomen steht;
m und n stehen jeweils für Zahlen von 0,01 bis 1, wobei die Summe von n und m stets 1 ergibt.

Weiterhin verwendbar als Fluorpolymere sind Polymere mit wiederkehrenden Einheiten der Formeln (III) - (VII):

-(CF₂-CF₂)ₘ-(CH₂-CH₂)ₙ- (III)

-(CF₂-C(Cl)F)ₘ-(CH₂-CH₂)ₙ- (IV)

-CH₂-C(Cl)F- (V)

-CH₂-CF₂- (VI)

-CHF-CHF- (VII)

worin n und m die oben genannte Bedeutung besitzen.

Weiterhin können als Fluorpolymere Substanzen der Formel (I) oder (II) eingesetzt werden, bei denen Fluor teilweise gegen Chlor ersetzt ist. Die Fluorthermoplaste der Formeln (I) - (VII) können einzeln oder in Mischungen mit Fluorpolymeren eingesetzt werden.

Der erfindungsgemäß erzielbare Schäumungeffekt hängt von der Art des Sulfoxidgruppen enthaltenden Polymers, insbesondere von der Menge der Sulfoxidgruppen ab und von dem Anteil des Sulfoxidgruppen enthaltenden Polymers in dem Fluorpolymer. Außerdem hängt der Schäumungseffekt von der Schmelzviskosität des zu verschäumenden Fluorpolymers ab. Der Schaumstoff weist vorzugsweise eine um mindestens 50 Prozent verringerte Dichte gegenüber dem unverschäumten material auf.

Der Anteil an Sulfoxidgruppen enthaltendem Polymer in der Gesamtmischung liegt erfindungsgemäß im Bereich von 1 bis 50 Gew.-%, vorzugsweise von 3 bis 30 Gew.-%, insbesondere 5 bis 15 Gew.-%, bezogen auf das Gesamtgewicht der Mischung.

Das Erhitzen der Ausgangspolymere kann erfindungsgemäß in einem Temperaturbereich zwischen 240°C bis 400°C, bevorzugt bis 360°C erfolgen. Die genaue bevorzugte Temperatur hängt von der Struktur des verwendeten Sulfoxidgruppen enthaltenden Polymers ab. Je nach der elektronischen Struktur am Sulfoxid (elektronen-ziehende oder elektronen-schiebende Substituenten) zeigt die Sulfoxidgruppe eine leicht unterschiedliche thermische Stabilität. Bei Verwendung von Polyphenylensulfoxid liegt die Temperatur z. B. vorzugsweise im Bereich von 300°C bis 320°C. Ein an der Phenylgruppe bromiertes Polyphenylensulfoxid wird bevorzugt im Bereich von 260°C bis 300°C aufgeschäumt. Das Erhitzen wird vorzugsweise über eine Zeitdauer von 5 bis 30 Minuten durch geführt.

Gemäß der Erfindung können als Fluorpolymer auch Mischungen verschiedener Fluorpolymere und als Sulfoxidgruppen enthaltendes Polymer auch Mischungen verschiedener Sulfoxidgruppen enthaltenden Polymere eingesetzt werden. Auch ist der Zusatz von weiteren Polymeren wie z. B. Polyphenylensulfid zu der zu verschäumenden Mischung möglich.

Die aus dem Fluorpolymer und dem Sulfoxidgruppen enthaltenden Polymer bestehende Formmasse kann im allgemeinen als unverschnittenes Material eingesetzt werden. Möglich ist aber auch der Zusatz von weiteren organischen oder anorganischen Füllstoffen, wie Kreide, Talkum, Ton, Glimmer und/oder faserförmigen Verstärkungsmittel, wie Glas- und Kohlenstoffasern, Whisker, sowie weiterer Zusatzstoffe und Verarbeitungshilfsmittel, z. B. Pigmente, Farbstoffe, Antistatika, Gleitmittel, Trennmittel, Antioxidantien, thermische und/oder UV - Stabilisatoren, so daß handelsübliche gefüllte Fluorpolymere zur Schaumherstellung verwendet werden können.

Die Fluorpolymere können beispielsweise als Pulver, Preßlinge oder Folien eingesetzt werden. Die Pulver besitzen dabei handelsübliche Teilchengrößen, wobei auch Granulate verwendbar sind. Auch Folien oder Folienschnipsel können in geeigneter Form Verwendung finden.

Die Sulfoxidgruppen enthaltenden Polymere sollten, um einen gleichmäßigen Schaum zu erzielen, in Pulverform verwendet werden. Die mittlere Teilchengröße (D₅₀-Wert) liegt im Bereich von 0,3•10⁻⁶ bis 500•10⁻⁶m, vorzugsweise 0,5•10⁻⁶ bis 300•10⁻⁶ und insbesondere 0,5•10⁻⁶ bis 200•10⁻⁶m.

Das mittlere Molekulargewicht der Sulfoxidgruppen enthaltenden Polymeren, ausgedrückt als Gewichtsmittel M_{w}, liegt erfindungsgemäß zwischen 4000 und 200 000 g/mol, bevorzugt zwischen 10 000 und 150 000 g/mol, besonders bevorzugt zwischen 25 000 und 100 000 g/mol.

Die erfindungsgemäße Formmasse als solche ebenso wie der daraus hergestellte Schaumstoff können zur Herstellung von Formteilen verwendet werden. Die Formteile können als hochbeanspruchbare Funktionsbauteile, beispielsweise im Flugzeug- und Automobilbau, verwendet werden. Weitere Verwendungen der Formteile bieten sich im chemischen Apparatebau an. Die Schaumstoffe oder Formteile können als chemikalien- oder wärmebeständige Isolationsmaterialien dienen.

Die Materialien können frei oder in Preßwerkzeugen verschäumt werden, so daß man bereits fertige Bauteile erhalten kann.

Vorteile des erfindungsgemäßen Verfahrens zur Herstellung schaumförmiger Fluorpolymerstrukturen sind darin zu sehen, daß
- kein Zusatz von niedermolekularen Blähmitteln notwendig ist,
- das Verfahren mit einfachen technischen Mitteln durchführbar ist,
- Fluorpolymerschäume mit besonders geringer Dichte möglich sind
- und daß ein breiter Bereich des Schäumungsgrades und der Porengröße einstellbar sind.

Die Erfindung soll nachfolgend durch Ausführungsbeispiele noch näher erläutert werden, ohne aber auf die konkret dargestellten Ausführungsformen beschränkt zu sein.

### Beispiel 1:

In eine Aluminiumschale mit den Abmessungen 8,6 cm x 5,5 cm wurde eine Formmasse aus 45 g feingemahlenem Fluorpolymer mit der Struktur 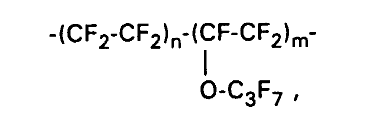 in der n = 0,96 und m = 0,04 bedeuten,
und 5 g feingemahlenem Polyphenylensulfoxid (hergestellt gemäß der Lehre der DE-A 43 14 737.6) eingefüllt und über eine Zeitdauer von 25 Minuten bei einer Temperatur von 310°C in einem geschlossenen Ofen geheizt. Dabei bildete sich ein Schaum mit einer dichten, geschlossenen Außenhaut (Integralschaum). Die Dichte des Schaums betrug 0,41 g/cm³ (zum Vergleich: Die Dichte des reinen Fluorpolymers beträgt 2,15g/cm³).

Der Schaum zeigte die für dieses Fluorpolymer erwartete Chemikalienbeständigkeit. So wurde er beispielsweise von HCl (37%), HNO₃ (65%), H₂SO₄ (95%), CH₃COOH (100%), NaOH (20%) und CHCl₃ nicht angegriffen.

### Beispiel 2:

Eine Formmasse aus 4,5 g Fluorcopolymer das aus 46 Gew.-% Tetrafluorethyleneinheiten, 44 Gew.-% Ethyleneinheiten und 10 Gew.-% Hexafluorpropyleneinheiten aufgebaut ist, und 5 g feingemahlenem Polyphenylensulfoxid wie in Beispiel 1 werden in einem Glasröhrchen mit einem Durchmesser von 5 mm über eine Zeitdauer von 15 Minuten bei einer Temperatur von 330°C in einem geschlossenen Ofen erhitzt. Dabei bildete sich ein Schaum mit einer dichten, geschlossenen Außenhaut. Das Volumen des Schaums erhöhte sich hierbei auf das 2,5-fache des Ausgangsvolumens.

## Patentansprüche

1. Verfahren zur Herstellung eines Schaumstoffes, wobei eine Formmasse auf Basis von Fluorpolymeren enthaltend 1 bis 50 Gew.-%, bezogen auf die Formmasse, mindestens eines Arylensulfoxideinheiten enthaltenden Polymers, bei einer Temperatur im Bereich von 240°C bis 400°C erhitzt wird.

2. Verfahren nach Anspruch 1, dadurch gekennzeichnet, daß die Formmasse bei einer Temperatur im Bereich von 280°C bis 340°C erhitzt wird.

3. Verfahren nach Anspruch 1 oder 2, dadurch gekennzeichnet, daß das Erhitzen über eine Zeitdauer von 5 bis 30 Minuten durchgeführt wird.

4. Verfahren nach einem der Ansprüche 1 bis 3, dadurch gekennzeichnet, daß die Formmasse 3 bis 30 Gew.-%, vorzugsweise 5 bis 15 Gew.-%, mindestens eines Arylensulfoxideinheiten enthaltenden Polymers enthält.

5. Verfahren nach einem der Ansprüche 1 bis 4, dadurch gekennzeichnet, daß das Arylensulfoxideinheiten enthaltende Polymer als Arylen Phenylen, Biphenylen, Anthracen oder Phenanthren enthält.

6. Verfahren nach einem der Ansprüche 1 bis 5, dadurch gekennzeichnet, daß das Arylensulfoxideinheiten enthaltende Polymer Arylensulfoxideinheiten der Formel -(-C₆H₄-SO-)- enthält.

7. Verfahren nach einem der Ansprüche 1 bis 6, dadurch gekennzeichnet, daß das mittlere Molekulargewicht des Arylensulfoxideinheiten enthaltenden Polymers, ausgedrückt als Gewichtsmittel M_{w}, 4 000 bis 200 000 beträgt.

8. Verfahren nach einem der Ansprüche 1 bis 7, dadurch gekennzeichnet, daß das Fluorpolymer Polymere mit wiederkehrenden Einheiten der Formeln (I) bis (VII) enthält, 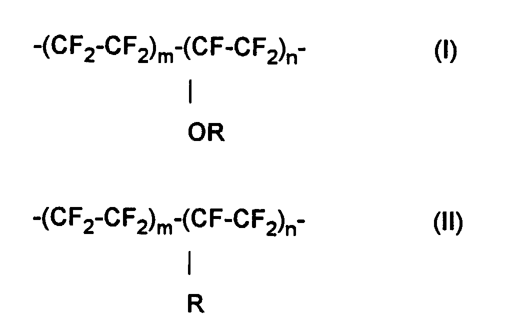
-(CF₂-CF₂)ₘ-(CH₂-CH₂)ₙ- (III)
-(CF₂-C(Cl)F)ₘ-(CH₂-CH₂)ₙ- (IV)
-CF₂-C(Cl)F- (V)
-CH₂-CF₂- (VI)
-CHF-CHF- (VII)
wobei R in (I) und (II) für einen oder mehrere verschiedene perfluorierte Alkylreste mit 1 bis 8 C-Atomen steht, wobei m und n jeweils für Zahlen von 0,01 bis 1 stehen und die Summe von n und m stets 1 ergibt und wobei die Fluoratome teilweise durch Chlor ersetzt sein können.

9. Verfahren nach einem der Ansprüche 1 bis 8, dadurch gekennzeichnet, daß die Formmasse zusätzlich thermische Stabilisatoren, UV-Stabilisatoren, Antistatika, Farbstoffe, Pigmente, anorganische und/oder organische Füllstoffe enthält.

10. Schaumstoff aus Fluorpolymeren hergestellt nach einem Verfahren gemäß einem der Ansprüche 1 bis 9, dadurch gekennzeichnet, daß er eine um mindestens 50 Prozent gegenüber dem unverschäumten Material verringerte Dichte aufweist.

11. Schaumstoff nach Anspruch 10, dadurch gekennzeichnet, daß er ein Integralschaum ist.

12. Verwendung eines Schaumstoffes nach Anspruch 10 oder 11 zur Herstellung von Formteilen.

13. Verwendung eines Schaumstoffes nach Anspruch 10 oder 11 als chemikalienbeständiges Isolationsmaterial.

## Claims

1. A process for producing a foam material, which comprises heating a molding composition based on fluoropolymers and containing from 1 to 50% by weight, based on the molding composition, of at least one polymer containing arylene sulfoxide units at a temperature in the range from 240°C to 400°C.

2. The process as claimed in claim 1, wherein the molding composition is heated at a temperature in the range from 280°C to 340°C.

3. The process as claimed in claim 1 or 2, wherein the heating is carried out over a period of from 5 to 30 minutes.

4. The process as claimed in any of claims 1 to 3, wherein the molding composition contains from 3 to 30% by weight, preferably from 5 to 15% by weight, of at least one polymer containing arylene sulfoxide units.

5. The process as claimed in any of claims 1 to 4, wherein the arylene present in the polymer containing arylene sulfoxide units is phenylene, biphenylene, anthracene or phenanthrene.

6. The process as claimed in any of claims 1 to 5, wherein the polymer containing arylene sulfoxide units comprises arylene sulfoxide units of the formula -(-C₆H₄-SO-)-.

7. The process as claimed in any of claims 1 to 6, wherein the mean molecular weight of the polymer containing arylene sulfoxide units, expressed as the weight average M_{w}, is from 4000 to 200,000.

8. The process as claimed in any of claims 1 to 7, wherein the fluoropolymer comprises polymers comprising recurring units of the formulae (I) to (VII), 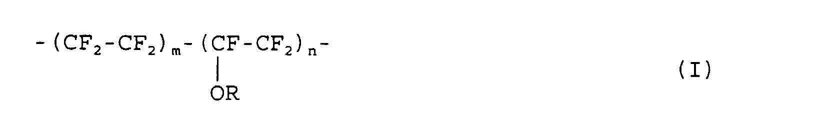 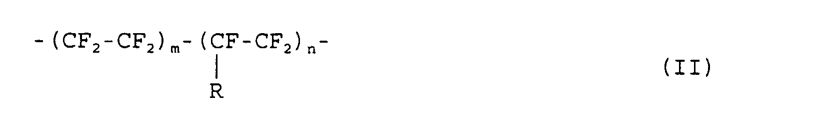
-(CF₂-CF₂)ₘ-(CH₂-CH₂)ₙ- (III)
-(CF₂-C(Cl)F)ₘ-(CH₂-CH₂)ₙ- (IV)
-CF₂-C(Cl)F- (V)
-CH₂-CF₂- (VI)
-CHF-CHF- (VII)
where R in (I) and (II) is a perfluorinated alkyl radical having from 1 to 8 carbon atoms or a plurality of different radicals of this type, where m and n are each numbers from 0.01 to 1 and the sum of n and m is always 1 and where the fluorine atoms can be partially replaced by chlorine.

9. The process as claimed in any of claims 1 to 8, wherein the molding composition additionally contains thermal stabilizers, UV stabilizers, antistatic agents, dyes, pigments, inorganic and/or organic fillers.

10. A foam material of fluoropolymers produced by a process as claimed in any of claims 1 to 9, which has a density at least 50 percent less than that of the unfoamed material.

11. A foam material as claimed in claim 10, which is an integral foam.

12. The use of a foam material as claimed in claim 10 or 11 for producing shaped parts.

13. The use of a foam material as claimed in claim 10 or 11 as a chemical-resistant insulation material.

## Revendications

1. Procédé de préparation d'une mousse, dans lequel une composition à mouler à base de polymères fluorés, contenant de 1 à 50% en poids, par rapport à la composition à mouler, d'au moins un polymère renfermant des motifs arylène-sulfoxyde, est chauffée à une température dans la gamme de 240°C à 400°C.

2. Procédé selon la revendication 1, caractérisé en ce que la composition à mouler est chauffée à une température dans la gamme de 280°C à 340°C.

3. Procédé selon la revendication 1 ou 2, caractérisé en ce que le chauffage est réalisé sur une période de 5 à 30 minutes.

4. Procédé selon l'une quelconque des revendications 1 à 3, caractérisé en ce que la composition à mouler contient de 3 à 30% en poids, de préférence de 5 à 15% en poids, d'au moins un polymère renfermant des motifs arylène-sulfoxyde.

5. Procédé selon l'une quelconque des revendications 1 à 4, caractérisé en ce que le polymère renfermant des motifs arylène-sulfoxyde renferme du phénylène, du biphénylène, de l'anthracène ou du phénanthrène en tant qu'arylène.

6. Procédé selon l'une quelconque des revendications 1 à 5, caractérisé en ce que le polymère renfermant des motifs arylène-sulfoxyde renferme des motifs arylène-sulfoxyde de formule -(-C₆H₄-SO-)-.

7. Procédé selon l'une quelconque des revendications 1 à 6, caractérisé en ce que le poids moléculaire moyen du polymère renfermant des motifs arylène-sulfoxyde, exprimé en tant que poids moléculaire moyen en nombre M_{w}, est de 4 000 à 200 000.

8. Procédé selon l'une quelconque des revendications 1 à 7, caractérisé en ce que le polymère fluoré comprend des polymères ayant des motifs récurrents de formules (I) à (VII) 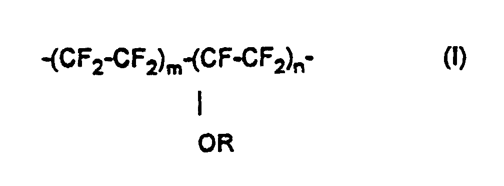 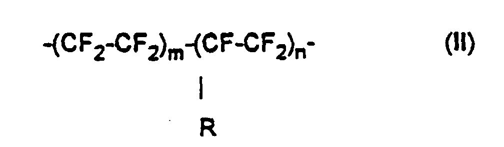
-(CF₂-CF₂)ₘ-(CH₂-CH₂)ₙ- (III)
-(CF₂-C(Cl)F)ₘ-(CH₂-CH₂)ₙ- (IV)
-CF₂-C(Cl)F- (V)
-CH₂-CF₂- (VI)
-CHF-CHF- (VII)
où R désigne, dans (I) et (II), un ou plusieurs radicaux alkyle perfluorés différents ayant de 1 à 8 atomes de carbone, où m et n désignent, dans chaque cas, des nombres allant de 0,01 à 1 et la somme de n et m vaut toujours 1, et où les atomes de fluor peuvent être remplacés en partie par du chlore.

9. Procédé selon l'une quelconque des revendications 1 à 8, caractérisé en ce que la composition à mouler contient en outre des stabilisants thermiques, des stabilisants aux UV, des agents antistatiques, des colorants, des pigments, des charges inorganiques et/ou organiques.

10. Mousse à base de polymères fluorés préparée d'après un procédé selon l'une quelconque des revendications 1 à 9, caractérisée en ce qu'elle présente une densité réduite d'au moins 50 pour cent par rapport au matériau non transformé en mousse.

11. Mousse selon la revendication 10, caractérisée en ce qu'il s'agit d'une mousse à peau intégrée.

12. Utilisation d'une mousse selon la revendication 10 ou 11 pour la production de pièces moulées.

13. Utilisation d'une mousse selon la revendication 10 ou 11 en tant que matériau isolant résistant aux produits chimiques.
